# DEMANDE DE BREVET EUROPEEN

(11) **EP 2 151 768 A1**
(43) Date de publication de la demande: **10.02.2010**
(21) Numéro de dépôt: 08013918.1
(22) Date de dépôt: 04.08.2008
(51) Int. Cl.: G06F 17/27, G06F 17/30

(54) **Dispositif d'auto-application de la structure logique du droit présente dans le langage naturel au sein des normes juridiques**

(71) Demandeur: Capitolin, Jean-Louis, 97212 Saint-Joseph (FR)
(72) Inventeur: Capitolin, Jean-Louis, 97212 Saint-Joseph (FR)

(57) **Abrégé**

Dispositif d'auto-application automatique de la structure logique du droit présente dans le langage naturel au sein des normes juridiques.

Ce dispositif est un programme d'accès à la structure logique du droit rendant un service à un client qui l'interroge et caractérisé par un automate d'états finis dont le comportement est guidé par un dispositif de logique formelle programmable. L'automate d'états finis est l'unité normative élémentaire (ENU) d'accès et le dispositif de logique formelle transcrit récursivement la structure logique du droit en protocoles de communications exécutables que l'ENU d'accès peut capter pour en exploiter le réseau.

Au moyen de ses deux espaces de nommage, celui du langage naturel et celui du langage de programmation, un interacteur envoie au programme serveur les paramètres de la requête du client aux fins d'évaluation d'une ou plusieurs ENU d'accès et affiche sur l'interface-client le résultat correspondant.

## Description

L'invention concerne un dispositif d'auto-application automatique de la structure logique du droit présente dans le langage naturel au sein des normes juridiques, et un procédé par lequel ce dispositif assure, dans le domaine de l'édition électronique des sources juridiques, une fonction numérique de clarté et d'accessibilité.

Considérons aujourd'hui, au plan du service public, la publication et la mise à disposition des actes juridiques sous forme électronique. Elles sont assurées, notamment dans le cadre du service public de diffusion du droit par l'internet, par Légifrance, dans des conditions de nature à garantir leur authenticité et l'interopérabilité des données. La fonction de diffusion est transmissive d'une norme ; celle-ci étant seulement « porter à connaissance » d'un destinataire de façon permanente et généralement gratuite. L'approche actuelle de l'Agence pour le Développement de l'Administration Électronique, confirme cette tendance en y ajoutant l'objectif d'interopérabilité des données.

Considérons parallèlement, au plan du marché, l'offre d'outils de connaissance du droit en s'en tenant aux sources brut. Elle est significative certes, notamment à l'adresse des professionnels, mais elle demeure classique dans l'activité d'édition des sources du droit car seuls ses vecteurs sont modernes. Pour le premier éditeur Lexbase http://www.lexbase.fr, dit numérique, 100% internet, les sources (lois, décrets, codes) intégrées sont exportées toutes les heures : l'actualisation permettant d'obtenir la version « à jour » d'un texte à la date spécifiée dans le formulaire de demande, mais non la version en vigueur de ce texte, comme il est parfois souhaitable notamment lorsque la version publiée n'est pas encore entrée en vigueur ou entre en vigueur rétroactivement. En outre, la jurisprudence, comme dans l'édition classique des codes annotés, constitue seulement un complément d'information (alerte éditoriale) pour faciliter la compréhension de la norme dans son environnement normatif et le pluralisme normatif ne fait l'objet d'aucun traitement spécifique. Il n'en résulte aucune modification significative dans l'édition des sources elles-mêmes en tant qu'opération numérique, eu égard à Légifrance, si ce n'est l'accès au choix à trois versions du texte : à jour, à une date qualifiée ou toutes les versions et parallèlement les nombreux services proposés. Ce choix ne permet pas d'appliquer la clarté et l'accessibilité à des entités plus petites que celle dans laquelle elles ont été édictées. D'une part, ce système ne fait que donner une forme électronique au document papier d'autre part, l'organisation dans la base de données de ces documents demeure régie principalement par leur source.

Ces deux approches, celle du service public et celle du marché, ont un caractère commun : elles ne tiennent pas compte de ce que l'état des techniques disponibles doit être examinée en considération de la nature de l'objet dont il permet le traitement et pas seulement en considération des traitements que ces techniques autorisent sur l'objet. Les technologies ne peuvent qu'imparfaitement réduire la complexité grandissante du droit positif si elles se heurtent à des problèmes techniques qui résultent de la nature même du droit et dont les solutions qu'elles contribuent à apporter ignorent la cause.

Il en est ainsi du problème de la mise à jour automatique dont la Direction Générale des collectivités territoriales étudie actuellement le programme (MAJA). Celle-ci consiste à analyser du texte juridique pour extraire les modifications apportées aux codes, aux autres lois et décrets et d'implanter automatiquement les modifications extraites dans le corpus correspondant. Dans cette hypothèse d'une part, le programme n'est pas propre aux données juridiques mais se présente comme un logiciel de synchronisation classique de données procédant par comparaison d'autre part, la nécessité d'une vérification par comparaison manuelle permanente de fichiers est maintenue, enfin cette opération n'exploite qu'insufisamment les facilités qu'offrent aujourd'hui les technologies auxquelles elle fait poutant appel.

Un autre problème technique survient au niveau des Déclaration de document type, (en anglais Document Type Declaration DTD) propre à chaque site de source juridique même si leur homogénéisation est en cours avec les schémas XML. Il reste que les possibilités ouvertes par le schéma XML sont sous-estimées dans la mesure ou chaque site de source juridique dispose des ses propres DTD si bien que l'on est contraint, dans cette hypothèse, à transformer les DTD existantes en schéma sans être en mesure, sans grandes difficultés, de refondre la globalité des sources dans un schéma nouveau.

Ces problèmes techniques ne sont pas sans répercussions sur la perception de l'accès au droit par le citoyen. Considérons son regard de plus en plus insistant sur le droit tel qu'il est exposé sur l'Internet (http://bloghorrée.berrendonner.org/wordpress/2006/09/22/legi france). Il pose le problème de l'accessibilité des données juridiques en mettant notamment en cause les difficultés rencontrées dans l'utilisation de Légifrance et notamment la notion de session, et attire l'attention sur la nécessité de services à valeur ajoutée et sur les doutes quant à la faisabilité d'un produit gratuit de qualité (Frédéric Rollin).

L'approche actuelle mérite donc d'être dépassée en portant l'effort en amont du processus de traitement des données juridiques par la définition de la structure de la complexité du droit.

En effet, la théorie du droit comme l'épistémologie indiquent que le droit n'est pas un objet scientifique comme les autres objets des sciences sociales. Son interprétation et son application comportent un ensemble de procédés logiques propres où règne la hiérarchie formelle. L'analyse du droit positif révèle en effet que certaines normes sont conçues comme des programmes destinés au traitement d'opérations relatives aux normes en général, ce qui leur confère un statut particulier.

Prenons l'exemple du système juridique français. Parmi les programmes destinés au traitement d'opérations relatives aux normes en général on trouve le mode de formation de l'ordre de juridique notamment sous la formule « ()est applicable à() » ou « est applicable de plein droit sous réserve d'adaptation », la modification d'un texte prescrite par la formule « ()est remplacé par() », « lire () à la place de () », l'opposabilité d'un texte réalisé soit, principalement par la précision d'une date d'entrée en vigueur soit, à défaut, par l'entrée en vigueur le lendemain de sa publication, mais encore le déclassement d'une norme ou enfin le report de la date d'entrée en vigueur d'un texte par le programme « Un décret en Conseil d'Etat fixe les conditions d'application du présent article ».

Pour décrire le mieux possible ce statut particulier qui est le leur on a recours à la métaphore et à la logique.

La métaphore est empruntée aux travaux du sociologue allemand Niklas Luhmann sur la complexité (Théorie de la société ou technologie sociale, 1971). Sur le fondement de sa théorie tous les procédés logiques relatifs à la norme forment un ensemble. Ces procédés portent le caractère de communication et sont des manières de partager avec la norme le sens dont chacune d'elle est porteuse. L'ensemble des communications possibles qui partagent le sens avec la norme fixe le périmètre du système et peut héberger l'algèbre de processus - CCS ("Calculus of Communicating Systems") R. Milner. Communication and Concurrency. Prentice Hall, 1989. Selon Niklas Luhmann « la structure n'est pas le facteur originaire du système : elle est la conséquence nécessaire du caractère limité de ses éléments et des liens possibles entre eux. C'est la condition de son opérativité. » La structure rend possible " le passage de la complexité non structurée à la complexité structurée ". La structure est en relation avec la manière dont se succèdent en chaîne les communications (programmes normatifs) en rapport avec un certain ordre fixé par la norme elle-même. Elle est donc une structure d'attente. La frontière du système est celle au-delà de laquelle aucun sens n'est possible. Il faut donc identifier et marquer ces procédés logiques relatifs à la norme.

À la communication comme fonction du système, empruntée à Niklas Luhmann il faut ajouter, selon l'invention, la logique formelle, et non la logique métaphorique ou métonymique comme il est question dans l'ouvrage de Marie-Claude Prémont, [Tropismes du droit. Logique métaphorique et logique métonymique du langage juridique, Liber. Thémis, collection « Le droit aussi », 2003, 191 pp., ISBN: 2-89578-032-3. ]Dans l'étude de l'auteur, la logique est une logique des propriétés de propositions sur le droit (méta-propositions) plus qu'une logique des propriétés de la norme elle-même (méta-droit) comme dans la présente invention. Cette précision est confirmée par Véronique Champeil-Desplats [- Structure et efficacité du langage juridique - International Journal for the semiotics of law, Springer Netherlands, volume 17, 4, 2004, pp.427-431], afin d'éviter, selon l'auteur, toute confusion. Les expressions en langage naturel « est applicable à (si) », « est remplacé par », « est complété par », « lire à la place de », « est ainsi rédigé », « est inséré » ou « est abrogé », « annule » sont des commandements que la norme s'applique à elle-même et qui, pour cette raison, forment une structure logique du droit positif pris dans son ensemble.

La présente invention est relative à un dispositif et un procédé d'auto-application automatique, en particulier de ces commandements présents dans la norme mais plus généralement des changements qu'elles commandent comme des modalités qui la concernent, par la transcription dans un interacteur de la structure logique de ceux-ci afin qu'ils soient exécutés sous la forme de signaux 0 et 1 lors de l'interrogation d'une banque de données juridiques par un client.

La transcription permet le passage de la langue naturelle dans laquelle sont rédigés les procédés logiques formels et qui sont, en vertu de la théorie pure du droit de Hans Kelsen, des *sollen* (devoir-être), au langage évolué, dit artificiel, dans lequel est écrit sa structure logique, c'est-à-dire le *sein* (être). Cette structure logique est fonctionnelle (algorythme)et définit la nature de ces procédés logiques formels dans le droit, c'est-à-dire des protocoles de communications que l'exécution d'un programme permet d'établir. Ces protocoles de communications, qui sont des opérations, utilisent les descripteurs des données qui sont auto-descriptives stockées dans la base et dont la grammaire et la syntaxe sont fixées par le schema de l'eXtensible Markup LanguageXML (xmlschema). Sans préjudice du recours à la théorie de la structure rhétorique (RST) en amont de la transcription, les études sur la manipulation des structures mathématiques (histogrammes, transformées de Fourier...) relatives à certaines classes de descripteurs sont utiles [ A. Gupta, S. Santini. "Towards Feature Algebras in Visual Databases : The Case for a Histogram Algebra", in : Proceedings of the IFIP Working Conference on Visual Databases (VDB5), 2000. On peut utilement avoir également recours aux travaux réalisés par l'IRISA http://www.irisa.fr/irisa, unité de recherche à la pointe des sciences et des technologies de l'information et de la communication, notamment eu égard au projet Pampa qui se fondent sur les mathématiques des systèmes réactifs et répartis. Le projet Pampa trouve son fondement scientifique dans le labelled transition systems en anglais, abréviation LTS. Le système de transition étiqueté (LTS) est « un graphe orienté dont les arêtes, appelées transitions, sont étiquetées par une lettre prise dans un alphabet d'événements. Les sommets de ce graphe sont appelés états. M = (QM, A, TM $ \subset$ QM x A x QM, qinitM). Avec : QM ensemble des états, qinitM l'état initial, A l'ensemble des événements, TM la relation de transition. Les événements représentent les interactions (entrées ou sorties) du système avec son environnement. On parle alors de système de transitions entrées-sorties ou de IOLTS (input-output LTS). »

Dans la présente invention, l'activité d'évaluation de l'interacteur est justement associée aux types d'informations d'entrée définis par les tâches que permet d'accomplir celui-ci (inputs). Il produit des informations de sortie qui représentent le résultat de ces tâches (outputs). L'évaluation au sens de la présente invention consiste en l'opération qui permet le passage d'un état à l'autre. Quand plusieurs interacteurs sont nécessaires à la réalisation de la présente invention, leur hiérarchie permet une composition modulaire pour la réalisation d'une interaction complexe.

L'invention comporte donc un procédé caractérisé par la relation intime entre le ou les interacteur(s) (dispositif) et la matrice de données (mp), relation du type de celle que l'on trouve entre un ou des organe vital(aux) et son hôte. Cette notion de matrice illustre selon l'invention un nouveau concept de la base de données juridiques organisée non pas en raison de la structure externe des données (leur forme) et de leur hiérarchie primitive mais en raison des flux, c'est-à-dire de leur structure logique. La forme atomique de ses éléments est celle de l'Elementary Normative Unit (ENU) qui est généralement un article de loi, de décret ou d'un dispositif de décision juridictionnelle, étant donc, selon l'invention, un objet au sens du langage objet. Cet ENU déclenche les opérations prévues dans l'interacteur. Ainsi, l'évaluation qui en résulte permet à chaque ENU de décliner son identité propre ; si bien que l'identité du système juridique se trouve dans la dynamique auto-reproductive de ses éléments et la globalité des opérations d'autopoièse qui sont dans le système décrit sa susceptibilité (TEUBNER Gunther : « Le droit, un système auto-poietique » (traduit de l'allemand) Ed. PUF. Paris, 1993. 296 p).

L'interacteur (interacteur) peut alors enregistrer l'ensemble des variations rythmiques de la susceptibilité du système, sa chronesthésie, et reconstituer en permanence l'épaisseur historique d'une ENU à partir de l'anatomie du réseau d'ENU dans lequel elle est insérée.

Cette invention, illustre aussi bien l'apport de la programmation orientée objet que les langages de programmation objet notamment de type création, et plus particulièrement fondé sur la « delegation-based programmation » ou encore le « calcul à délégation », au domaine de l'édition numérique juridique. Son concept pluridisciplinaire, au croisement des sciences relatives à l'informatique, à l'épistémologie et au droit, permet de dépasser l'approche qui consiste seulement à respecter la structure du droit quand on peut aussi en exploiter la logique formelle.

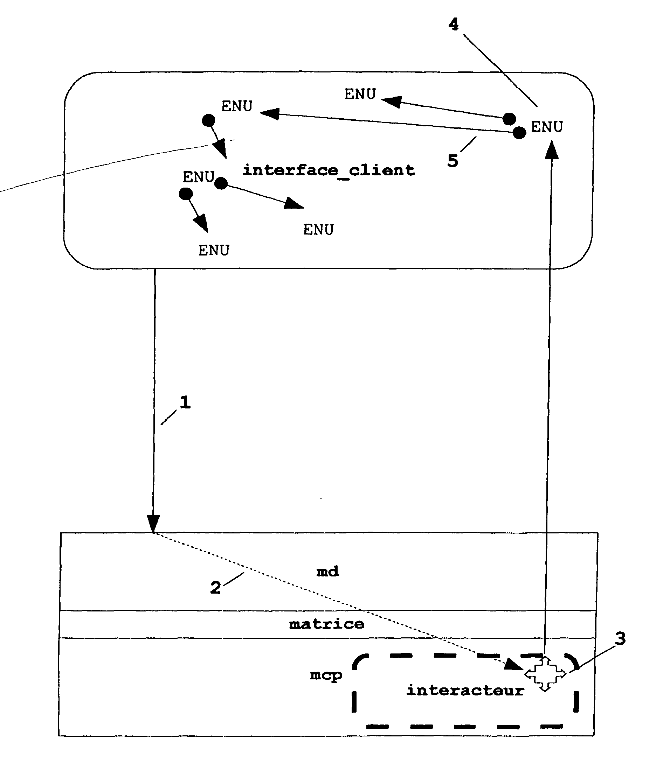

Le dessin annexé illustre le procédé selon l'invention :
En référence à ce dessin, le procédé comporte d'abord une interface client (interface_client) à partir de laquelle est envoyée une requête (1)que reçoit une matrice de données (matrice) comprenant deux espaces de nommage : celui résultant des DTD de l'opérateur (md) et celui relatif au schema prévu par le licencié qui fait usage des données juridiques (mcp) et dont il est fait référence dans la présente invention. La réponse à cette requête est ensuite redirigée (2) vers l'interacteur afin que les unités normatives élémentaires (ENU) qu'elle contient soient évaluées (3). Enfin, l'ENU évaluée s'affiche comme une mini-application sur l'interface_client (4). La méthode clône de l'interacteur permettant de produire autant d'ENU que d'inputs initiaux et de nouvelles requêtes faites à partir de l'interface de chacune d'elles (5).

L'interacteur, c'est-à-dire le dispositif selon l'invention, est une ENU de classe supérieure, un prototype au sens de la programmation basée sur la délégation. Par conséquent, la manière dont l'invention est susceptible d'application industrielle se mesure au niveau d'abstraction auquel les problèmes contemporains sont posés pour être résolus, à la technologie que le dispositif selon l'invention exige (cybernétique par exemple), ainsi qu'à la fonction numérique de clarté et d'accessibilité effective qu'il assure.

À cet égard, l'invention est susceptible, en outre, d'application industrielle durable en apportant une contribution aux nouvelles exigences de sécurité juridique qui apparaisent dans tous les systèmes juridiques contemporains, et ce de plusieurs points de vue.

Le premier concerne la mise à jour des données juridiques, assurée « point-to-time » et « point-to-space » par l'interacteur, c'est-à-dire automatiquement et au moment de la réponse adressée au client sans qu'à aucun moment il en résulte un document consolidé qui se trouverait lui-même dans la base de données. La consolidation devient une opération numérique, au sens propre, qui respecte l'état exact du droit en vigueur, et non plus la fiction dans laquelle elle rend compte de cet état, comme présentement ; sans préjudice de la codification à droit constant. L'accessibilité et la clarté consiste dans cette invention, non pas à mettre l'auteur de la requête en mesure de « retrouver une disposition dans sa version en vigueur à une date donnée », comme cela est spécifié en recherche experte dans legifrance, mais à confier à un interacteur le soin de le faire pour lui, en distinguant la version en vigueur qui résulte du calcul, de la version publiée consignée dans la matrice (md).

Selon l'invention, l'actualisation étant effectuée selon les règles contenues dans le droit lui-même, l'interacteur n'évalue que lorsque la valeur existe, c'est-à-dire lorsqu'elle est en vigueur et tant qu'elle l'est. Ainsi, par exemple, dans l'hypothèse d'entrée en vigueur suspendue par un décret d'application non encore édicté, l'interface de l'ENU affiche une information relative à l'attente dont est grevé l'objet de la requête, information que l'auteur de la requête peut approfondir en obtenant la disposition non encore en vigueur faisant l'objet de cette attente. Dans ce cas, le décret d'application peut lever l'attente en cela qu'il agit comme un révèlateur qui permet à la disposition dont l'entrée en vigueur est suspendue, de passer de l'état de *négatif* à l'état de positif. L'interacteur agit donc, selon l'invention, comme une *chambre claire* (Roland Barthes).

Le second point réside dans la définition d'un concept qui selon l'invention est résolument ouvert dès lors que toute opération avec l'environnement est une opération dans le système ; ce qui permet d'envisager, par exemple, des modèles d'intégration ou d'articulation de droits positifs concernant des ordres juridiques distincts, dans la droite ligne actuelle et future de l'interopérabilité. La susceptibilité du système peut donc être définie quel que soit l'hôte. Le développement de l'édition de données numériques juridiques nationales, européennes voire internationales trouvera un regain.

Enfin, s'intéressant aux données et non aux traitements, cette invention limite au strict nécessaire l'intervention humaine dans le traitement des données juridiques dès lors que l'on admet que ce traitement est prévu par les données elles-mêmes. Par ailleurs, les opérations de vérifications et de contrôle, si elles constituent, selon l'invention, l'essentiel de l'intervention humaine, ne portent pas sur des fichiers ou des documents mais sur un processus mécanique et l'efficacité de sa mis en oeuvre. Selon l'invention la consolidation est une opération mécanique qui s'exécute dans la base de données et non un document nouveau qui doit s'y trouver. On pourra s'inspirer utilement des travaux réalisés par le Laboratoire d'informatique fondamentale de Marseille UMR 6166 CNRS Université de la Méditerranée, Université de Provence http://www.lif.univ-mrs.fr/ sur les automates d'états finis implémentés sous forme matérielle avec un dispositif de logique programmable, ainsi que sur ceux du Laboratoire du Génie de la Conception (LgeCo) Institut National des Sciences appliquées (INSA) 24 boulevard de la Victoire, 67084 Stasbourg cedex.

Dans toute cette mesure, le dispositif et le procédé selon l'invention sont particulièrement destinés à l'édition électronique des sources juridiques, au développement de toutes études et recherches de type qualitatif ou quantitatif dans le domaine juridique ainsi qu'utiles aux opérations d'harmonisation et de codification du droit.

## Revendications

1. Dispositif d'accès à la structure logique du droit **caractérisé par** un automate d'états finis dont le comportement est guidé par un dispositif de logique formelle programmable.

2. Dispositif d'accès à la structure logique du droit selon la revendication 1 **caractérisé en ce que** :
--- premièrement, l'automate d'états finis est une unité normative élémentaire d'accès (Elementary Normative Unit - E.N.U.) résultant de l'évaluation d'un protocole de communication, de type Labelled Transition Systems (L.T.S.) ;
--- deuxièmement, le dispositif de logique formelle comporte plusieurs programmes d'accès dont :
- une bibliothèque de descripteurs de données auto-descriptives appartenant à l'espace de nommage du langage naturel dans lequel ces données sont exprimées et dont la grammaire et la syntaxe sont fixées par le schema de l'eXtensible Markup Language (xmlschema) ;
- un analyseur fonctionnel d'expressions régulières décrites permettant l'identification et la recension de tous les procédés logiques relatifs à la norme ;
- un transcripteur permettant de transcrire ces procédés dans des protocoles de communications exécutables ;
- une bibliothèque des protocoles de communication appartenant à l'espace de nommage du langage de programmation et comportant notamment les types de programmes suivants :
. les protocoles de type L.T.S. comme par exemple l'article de loi ou de décret, le dispositif de décision juridictionnelle, en tant qu'unité normative élémentaire d'accès (E.N.U.) ;
. les protocoles de type entrée/sortie qui commandent l'exécution en particulier des ordres de changements, des solutions de conflits, des règles d'interprétation que peut capter l'automate si ces programmes le concernent et lui permettent d'exécuter ceux-ci en cohérence avec les éléments fournis par le formulaire de requête client ;
. les protocoles de type consolidation qui sont les commandements présents dans les programmes captés par l'automate et relatifs à l'applicabilité de la norme dont la connaissance est demandée ;
. les protocoles permettant d'administrer, au moyen de la bibliothèque des descripteurs de données, les procédés logiques nouveaux ou présentant une particularité par rapport à des procédés existants ;
--- troisièmement, l'accès est commandé par le mode de formation de l'ordre juridique **caractérisé par** les protocoles de communications suivants : 'est_applicable 'n'est_pas applicable et 'en_attente;
--- quatrièmement, le programme du dispositif de logique formelle rend un service à un client qui l'interroge.

3. Dispositif d'accès à la structure logique du droit selon la revendication 2 **caractérisé en ce que** le programme serveur implémente une algèbre des processus suivants :
--- l'analyse des chaînes de caractères par système et ordre juridiques ;
--- l'application du mode de formation de l'ordre juridique
--- la génération d'une matrice de positions
--- l'évaluation des unités normatives élémentaires d'accès (E.N.U.) construites au moyen des éléments fournis par le formulaire de requête client ;
--- la vérification et le contrôle de l'intégrité des chaînes, communications, protocoles, bibliothèques, transcriptions ainsi que le contrôle des requêtes ;
--- la mise à jour des chaînes de caractères de données furidiques au moyen de l'ajout de chaînes de caractères selon un fréquence réglée par la publication au journal officiel des actes juridiques.

4. Dispositif d'accès à la structure logique du droit selon la revendication 3 **caractérisé en ce que** le mode de formation de l'ordre juridique est un programme relatif aux propriétés de la norme juridique au moyen duquel les communications s'établissent dans le temps, dans l'espace et dans la matière.

5. Dispositif d'accès à la structure logique du droit selon l'une quelconque des revendications de 1 à 4 **caractérisé par** une matrice autopoïétique qui utilise récursivement, en tant que matrice de programmes exprimés comme structures logiques de données, sa structure de matrice de données juridiques exprimées en chaînes de caractères.

6. Dispositif d'accès à la structure logique du droit selon la revendication précédente **caractérisé par** un interacteur, une interface-client et une mini-application.

7. Dispositif d'accès à la structure logique du droit selon la revendication précédente **caractérisé en ce que** ;
--- l'interface-client comporte des fonctions de connexion au programme serveur, d'envoi de la requête client au moyen d'un formulaire de saisie des éléments de celle-ci, d'enregistrement et de manipulation des résultats ainsi qu'un ou plusieurs interacteurs.
--- l'interacteur est une partie de l'architecture logicielle de l'interface-client qui :
- reçoit des informations de l'interface-client et du programme serveur ;
- interprète les informations reçues au moyen des deux espaces de nommage matriciel, celui du langage naturel et celui du langage de programmation ;
- envoie les informations provenant des champs du formulaire au programme serveur ;
- affiche la liste des résultats de l'interaction simple ou complexe sur l'interface-client ;
- présente chacun de ces résultats au moyen d'une mini-application.
--- la mini-application est la représentation graphique de l'automate d'états finis et rend les services suivants au client qui l'utilise :
- la consultation d'un tableau de bord où s'affiche la norme de droit dont la connaissance est requise ;
- la navigation dans la matrice de programmes exprimés comme structures logiques de données ;
- l'affichage sur l'interface-client d'automates d'états finis qui partagent, dans la matrice de données juridiques exprimées en chaînes de caractères, du sens avec les automates déjà affichés.

8. Dispositif d'accès à la structure logique du droit selon les revendications 2, 3, 4 et 5 **caractérisé par** un système de communications dont l'automate d'états finis exploite le réseau au moyen des éléments de la requête client.

## Revendications modifiées

### Revendications modifiées conformément à la règle 137(2) CBE.

1. Dispositif d'auto-application automatique de la structure logique du droit **caractérisé par** l'écriture et la compilation, dans le langage d'un interprète, d'une partition ƒ 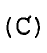 de la chaîne de caractères 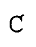 du document textuel du domaine juridique, formant son recouvrement, et procédé par lequel une fonction numérique de clarté et d'accessibilité est mise en oeuvre au moyen de ce dispositif.

2. Dispositif d'auto-application automatique de la structure logique du droit, selon la revendication 1, **caractérisé en ce que** :
--- premièrement, la partition ƒ 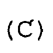 est, dans sa version simplifiée, un espace vectoriel dont les points mémoire sont des espaces vectoriels de nom ∂ et un champ tensoriel dans sa version généralisée
--- deuxièmement, dans la version simplifiée, le recouvrement est fait au moyen :
- de deux types de point mémoire d'un espace topologique que sont le descripteur et l'unité normative élémentaire ; chaque nom de descripteur et chaque nom d'unité normative élémentaire étant susceptible d'être en mention ou en usage
- de deux types, en mention et en usage, d'espace de noms.
- d'une relation *R1* de colinéarité formalisée par l'espace vectoriel ∂ caractérisant l'alignement des paires pointées identifiant les formes d'expressions identiques du nom "∂"
- lorsque le nom "∂" est de type unité normative élémentaire, d'une relation *R*2 de colinéarité formalisée par l'espace vectoriel ƒ 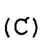 caractérisant l'alignement des espaces vectoriels ∂ identifiant les formes d'expressions distinctes du nom ∂.
- d'un format d'unité normative élémentaire ƒ("∂") ou format du point sous forme de matrice d'accès
- du semion qui est la classe d'équivalence entre une unité normative élémentaire (forme de l'expression) et l'accès à ses propriétés suivant la relation *R3* d'adressage du format d'unité normative élémentaire ƒ("∂") selon ses coordonnées homogènes (forme du contenu).

3. Dispositif d'auto-application automatique de la structure logique du droit, selon la revendication 2,
**caractérisé en ce que** :
--- premièrement, un point mémoire de l'espace topologique est de type unité normative élémentaire lorsque sa chaîne de caractères ne comporte qu'une unité et un descripteur dans le cas contraire.
--- deuxièmement, par défaut, le nom d'un descripteur est en mention, le nom d'une unité normative élémentaire est en usage, la partie 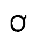 de 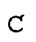 appartenant à la structure topologique 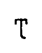 est un espace de noms en usage et le voisinage des points de 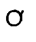 est un espace de noms en mention.
--- troisièmement, la discordance de type entre un nom et un espace définit un protocole de communication
--- quatrièmement, l'identification des descripteurs de 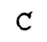 appartenant à la même classe d'équivalence suivant la relation *R1* est faite au moyen de l'application canonique ƒ : 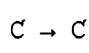 /*R1* tel que "∂" → ∂
--- cinquièmement, l'identification et le formatage des unités normatives élémentaires d'une partie 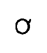 de 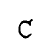 appartenant à la même classe d'équivalence suivant la relation imbriquée 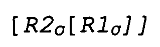 sont faits au moyen de l'application canonique composée g o ƒ : 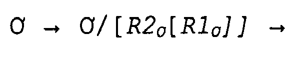 ƒ 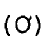 tel que "∂" → ∂ₙ → ƒ("∂")

4. Dispositif d'auto-application automatique de la structure logique du droit, selon la revendication 3, **caractérisé en ce que** :
--- premièrement, g est une application qui écrit une application *h* définissant le format de données de l'unité normative élémentaire par une matrice d'accès ƒ("∂") aux propriétés de chaque unité de ∂
--- deuxièmement, un accès ƒ("∂") aux propriétés de chaque unité de ∂ est une fonction dont l'appel capture, dans son voisinage, les propriétés qu'elles partagent avec d'autres, au besoin en décrivant, au moyen des paires pointées, les séquences nécessaires au calcul. La position d'une unité normative élémentaire dans 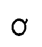 (car.cdr) ainsi que la fonction (string unité_normative_élémentaire) sont des propriétés dans 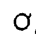 , au même titre que les dates ou les différents éléments chiffrés de l'habitus.
--- troisièmement, l'évaluation des accès est subordonnée à la capture des coordonnées homogènes de chaque unité normative élémentaire lors de l'adressage suivant *R3* de l'appel de g formatant l'empreinte dans la mémoire de l'ordinateur de chaque unité de ∂ par la transcription des propriétés dans le format matriciel ƒ("∂")
--- quatrièmement, l'empreinte des descripteurs, notamment celle de la signature, et celle des unités normatives élémentaires, notamment avant leur formatage, permettent d'effectuer des opérations de confidentialité, d'authenticité, d'intégrité et de sauvegarde des données de la partition de 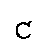 lors du recouvrement

5. Procédé par lequel le dispositif d'auto-application automatique de la structure logique du droit assure une fonction numérique de clarté et d'accessibilité, selon les revendications précédentes, **caractérisé par** la simulation d'actes de langue au moyen des semions de la partition formatée de 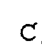 , dans un temps d'accès efficient (accès mémoire, accès homogène, espace d'accès)

6. Procédé par lequel le dispositif d'auto-application automatique de la structure logique du droit assure une fonction numérique de clarté et d'accessibilité, selon les revendications 2, 3, 4 et 5, **caractérisé en que** :
--- premièrement, la simulation d'actes de langue est activée en entrée par ∂ₙ de ƒ 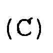 dont la représentation interne est un espace vectoriel où les dimensions de chaque semion déterminent un nombre constant d'états (forme du contenu) variants chacun selon l'adresse de l'unité dans la partition (forme de l'expression)
--- deuxièmement, les symboles de ƒ 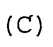 et l'ensemble des opérateurs les manipulant forment la langue de simulation employée d'une part, pour accéder et communiquer la connaissance des états résultant de leur représentation interne d'autre part, pour écrire de nouveaux états traduisibles en nouvelles chaînes 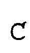 , pour rassembler classer des états existants dans des formes d'états nouveaux ou enfin télé-transmettre ces états.
--- quatrièmement, le format d'unité normative élémentaire à l'infini est la base adaptée au schéma XML de ƒ 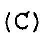
--- cinquièmement, le semion est une application sémiotique linéaire liant une unité normative élémentaire à son format de données.

7. Procédé et dispositif d'auto-application automatique de la structure logique du droit, selon les revendications 5 et 6 **caractérisés par** :
--- premièrement, l'implémentation d'une capacité d'interprétation d'une requête formulée, en entrée, au moyen d'un alphabet sémiotique ƒ 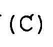 .
--- deuxièmement, la simulation d'une part, d'une faculté de mise en oeuvre s'exerçant sur cette capacité notamment au moyen de protocoles de communication, de bibliothèques du métalangage et de descripteurs d'autre part, d'un acte de langue formulant le résultat de la mise en oeuvre en sortie notamment au moyen du Schéma XML.
--- troisièmement, l'équivalence en vertu de l'invention, entre l'alphabet d'une langue naturelle et l'alphabet sémiotique de son système juridique

8. Procédé et dispositif d'auto-application automatique de la structure logique d'un texte, selon les revendications précédentes, **caractérisés en ce que** l'auto-application automatique de la structure logique du droit est un semiographe qu'une requête stimule en mode commande ou graphique.
